(19) Europäisches Patentamt
European Patent Office
Office européen des brevets

(11) Veröffentlichungsnummer: **0 305 815 A2**

# (12) EUROPÄISCHE PATENTANMELDUNG

(21) Anmeldenummer: **88113386.2**

(51) Int. Cl.4: **C08G 75/02 , C08K 9/00**

(22) Anmeldetag: **18.08.88**

(30) Priorität: **27.08.87 DE 3728602**

(43) Veröffentlichungstag der Anmeldung: **08.03.89 Patentblatt 89/10**

(84) Benannte Vertragsstaaten: **BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Reichert, Karl-Heinz, Prof. Dr.**
**Olwenstrasse 39b**
**D-1000 Berlin 28(DE)**
Erfinder: **Koschinski, Ingo**
**Weisestrasse 46**
**D-1000 Berlin 44(DE)**

## (54) Faserverstärktes Polyphenylensulfid.

(57) Die Erfindung betrifft faserverstärktes Polyphenylensulfid und ein Verfahren zu dessen Herstellung.

EP 0 305 815 A2

Xerox Copy Centre

## Faserverstärktes Polyphenylensulfid

Die Erfindung betrifft faserverstärktes Polyphenylensulfid und ein Verfahren zu dessen Herstellung.

Es ist bekannt, die Polymerisationsreaktion von Dihalogenbenzolen und Schwefelverbindungen zur Herstellung von Polyphenylensulfid in Gegenwart chemisch aktivierter Fasern und Füllstoffe durchzuführen (DE-OS 34 269 18).

Dieses Verfahren konnte weiterentwickelt werden, wenn zur Aktivierung der Fasern bestimmte organische Säurechloride verwendet werden.

Gegenstand der Erfindung ist daher faserverstärktes Polyphenylensulfid, das dadurch gekennzeichnet ist, daß die Polykondensation zur Herstellung von Polyphenylensulfid in Gegenwart von chemisch mit Arylsulfonsäurechlorid aktivierten Fasern durchgeführt wird.

Zur chemischen Aktivierung der Faser werden Arylsulfonsäurechloride verwendet. Vorzugsweise wird p-Chlorbenzolsulfonsäurechlorid eingesetzt.

Die Polykondensation zur Herstellung des Polyphenylensulfids kann analog z. B. zu den aus US-PS 33 54 129, 38 76 592, 25 13 188, 25 38 941, DE-AS 24 53 749, DE-OS 26 23 333 bekannten Verfahren durchgeführt werden.

Bei der Herstellung der erfindungsgemäß faserverstärkten Polyphenylensulfide wird die chemisch aktivierte Faser der Umsetzungslösung, die das Dihalogenbenzol, gegebenenfalls einen Trihalogenaromaten, Katalysator und Lösungsmittel enthält, zugesetzt, und dann wird die Polymerisation durchgeführt.

Gegenstand der Erfindung ist weiterhin ein Verfahren zur Herstellung von gegebenenfalls verzweigten, verstärkten Polyarylensulfiden aus

a) 50-100 Mol-% Dihalogenaromaten der Formel (I)

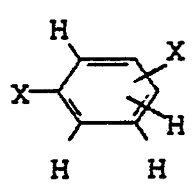

(I),

und 0-50 Mol-% Dihalogenaromaten der Formel (II)

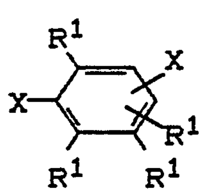

(II),

in denen

X für zueinander meta oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei orthoständige Reste $R^1$ zu einem aromatischen oder heterocyclischen Ring verknüpft sein können und immer ein Rest $R^1$ verschieden von Wasserstoff ist und

b) 0-3 Mol-%, bevorzugt, 0,1 bis 2,9 Mol-%, besonders bevorzugt 0,4 bis 2,4 Mol-%, bezogen auf die Summe der Dihalogenaromaten der Formel I und II, eines Tri- oder Tetrahalogenaromaten der Formel (III)

$ArX_n$ (III),

wobei

Ar ein aromatischer oder heterocyclischer Rest ist,

X für Halogen wie Chlor oder Brom steht und

n 3 oder 4 ist und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von (a+b):c im Bereich von 0,85:1 bis 1,15:1 liegt, in einem organischen Lösungsmittel, gegebenenfalls unter Mitverwendung von Katalysatoren und/oder Cosolventien, dadurch gekennzeichnet, daß dem Umsetzungsgemisch chemisch mit Arylsulfonsäuren aktivierte Fasern zugesetzt werden und die Umsetzung bei einer Temperatur von 160 °C bis 320 °C, vorzugsweise 165 °C bis 270 °C durchgeführt wird.

Als Katalysatoren können für diese Umsetzung gegebenenfalls übliche Substanzen in üblichen Mengen eingesetzt werden, beispielsweise Alkalifluoride und Alkalicarboxylate (z. B. DE-PS 2 453 748, US-PS 3 354 129).

Als Cosolventien können gegebenenfalls beispielsweise N,N-Dialkylcarbonsäureamide von $C_1$-$C_8$-aliphatischen und $C_6$-$C_{12}$-aromatischen Carbonsäuren in einer Menge von 0,02 bis 1,0 Mol, bezogen auf 1 Mol Alkalisulfid, eingesetzt werden.

$R^1$ steht in Formel II vorzugsweise für Wasserstoff, $C_1$-$C_{20}$-Alkyl, $C_5$-$C_{20}$-Cycloalkyl, $C_6$-$C_{24}$-Aryl, $C_7$-$C_{24}$-Alkylaryl oder $C_7$-$C_{24}$-Aralkyl. Weiterhin können zwei zueinander ortho-ständige Reste $R^1$ einen ankondensierten aromatischen Ring mit insgesamt 6 C-Atomen oder einen ankondensierten heterocyclischen Ring mit 5 bis 6 Ringatomen und 1 bis 3 Heteroatomen wie N, O und S bilden.

Ar steht in Formel (III) vorzugsweise für einen aromatischen Rest mit 6 bis 24 C-Atomen oder heterocyclischen Rest mit 6 bis 24 Ringatomen, besonders bevorzugt für einen aromatischen Rest mit 6 bis 10 C-Atomen oder heterocyclischen Rest mit 6 bis 10 Ringatomen, wobei die heterocyclischen Reste bis zu 3 Heteroatome wie N, S, O enthalten können.

Alkalisulfide werden in üblichen Mengen und in üblicher Weise eingesetzt, z. B. sind Natrium- und Kaliumsulfid (hydrate) geeignet. Es können auch Alkalisulfide eingesetzt werden, die aus Hydrogensulfiden mit wäßrigen Alkalihydroxiden wie NaOH und KOH hergestellt werden. In jedem Fall können Mischungen sowohl der Sulfide als auch der Hydroxide eingesetzt werden.

Die Alkalisulfide können in einem oder mehreren Schritten, beispielsweise durch Abdestillieren des Wassers aus der Reaktionslösung auf übliche Art entwässert werden. Beim erfindungsgemäßen Verfahren braucht die Entwässerung nicht vollständig zu sein. Die partielle Entwässerung kann z. B. vor der Zugabe der Dihalogenverbindung der Formel (I) und (II) vorgenommen werden.

Eventuell als Cosolvenz verwendete N,N-Dialkylcarbonsäureamide werden bevorzugt vor der Entwässerung der Alkalisulfide eingesetzt. Es ist jedoch möglich, die Cosolventien zusammen mit den Polyhalogenverbindungen zu dem entwässerten Umsetzungsgemisch zu geben.

Das Zusammengeben der Komponenten kann in beliebiger Reihenfolge erfolgen. Die Dihalogenaromaten der Formeln (I) und (II) und die Tri- bzw. Tetrahalogenaromaten der Formel (III) und die chemisch aktivierte Faser können zusammen oder getrennt, kontinuierlich, in Portionen oder direkt auf einmal zu dem Alkalisulfid, dem Lösungsmittel oder einem Teil davon gegeben werden. So können beispielsweise Alkalisulfid zusammen mit dem Lösungsmittel oder einem Teil davon zu den Verbindungen der Formeln (I), (II) und (III) gegeben werden. Es können auch alle Komponenten direkt zusammengegeben werden. Jede andere Kombination der Zugabe der Komponenten ist ebenfalls möglich.

Erfindungsgemäß können Gemische aus meta- und para-Dihalogenaromaten der Formel (I) bzw. (II) eingesetzt werden. In diesem Fall kann das molare Verhältnis m:p höchstens 30:70 betragen.

Zur Herstellung thermoplastisch verarbeitbarer Polyphenylensulfide werden besonders bevorzugt p-Dihalogenaromaten eingesetzt.

Beispiele für erfindungsgemäß einzusetzende Dihalogenaromaten der Formel (I) sind: p-Dichlorbenzol-, p-Dibrombenzol, 1-Chlor-4-brombenzol, 1,3-Dichlorbenzol und 1,3-Dibrombenzol. Sie sind allein oder im Gemisch miteinander verwendbar. Besonders bevorzugt sind 1,4-Dichlorbenzol und/oder 1,3-Dichlorbenzol.

Beispiele für erfindungsgemäß einzusetzende Dihalogenaromaten der Formel (II) sind; 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-Dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2′-4,4′-Tetrachlorbiphenyl, 1,3,5-Trichlor-triazin usw..

Sollen verzweigte Polyarylensulfide hergestellt werden, so sollten mindestens 0,1 Mol-% eines Tri- oder Tetrahalogenaromaten der Formel (III) eingesetzt werden.

Die erfindungsgemäße Umsetzung wird bei einer Temperatur von 160 °C bis 320 °C, vorzugsweise 165 °C bis 270 °C durchgeführt, gegebenfalls bei einem Druck bis $10^3$ Pa.

Dem Umsetzungsgemisch werden chemisch aktivierte Fasern zugesetzt. Als Faser können beispielsweise verwendet werden: Pechfasern (Typ P-M 104 T®, Sigri/Meitingen, Aramidfasern wie Kevlarfaser® (Du pont), Kohlenstoff-Fasern auf PAN-Basis (z.B. SIGRAFIL® SFC 0,5 von SIGRI/Meitingen usw.

Weiterhin können gegebenenfalls als Füllstoffe Materialien zugegeben werden, z. B. Silikate, Alumosilikate (z. B. Mica, Asbest, Kaolin, Talkum), Calciumsilikate u. ä. (z.B. US-PS 4 425 384), einzeln und als Mischungen.

Die Fasern werden durch Vorbehandlung mit Arylsulfonsäurechloriden in einem Suspensionsmittel (z. B. EXSOL® D 80) bei erhöhter Temperatur von 150 bis 300 °C aktiviert. Die Fasern werden dabei in ein Gefäß, z.B. in einen Glaskolben eingebracht und z.B. mit Hilfe eines Heizpilzes unter Inertgasatmosphäre (z.B. Stickstoff) mit dem Arylsulfonsäurechlorid und gegebenenfalls einem Suspensionsmittel (z.B. EXSOL® D 80) auf die erforderliche Reaktionstemperatur aufgeheizt. Dies kann unter Rühren des Reaktionsgutes geschehen. Die Oberflächenreaktion wird dann für ca. 2 bis 6 Stunden, vorzugsweise 2 bis 4 Stunden bei dieser Temperatur durchgeführt.

Diese vorbereitete Faser enthält chemisch an der Faser gebundenes Arylsulfonsäurechlorid. Sie wird dann der Umsetzungslösung zur Herstellung von Polyphenylensulfid zugegeben. Bei der Umsetzung kann dann das Polyphenylensulfid auf die Faser durch chemische Reaktion aufziehen.
Die Reaktionszeit kann bis zu 12 Stunden betragen, vorzugsweise 1 bis 9 Stunden. Eine stufenweise Steigerung der Reaktionstemperatur während dieser Zeit kann vorteilhaft sein.

Die Aufarbeitung des Reaktionsgemisches und die Isolierung der faser-verstärkten Polyarylensulfide kann in bekannter Weise erfolgen.

Das faserverstärkte Polyarylensulfid kann direkt aus der Reaktionslösung oder erst nach Zugabe, z. B. von Wasser und/oder verdünnten Säuren, nach üblichen Verfahrensweisen abgetrennt werden (beispielsweise durch Filtration oder durch Zentrifugieren).

Nach der Filtration schließt sich im allgemeinen zur Entfernung von anorganischen Bestandteilen, die den Polymeren anhaften können (z. B. Reste von Alkalisulfiden und Alkalichloriden) eine Wäsche mit Wasser an.

Eine Wäsche oder Extraktion mit anderen Waschflüssigkeiten, die auch zusätzlich oder nachträglich zu dieser Wäsche durchgeführt werden kann, ist auch möglich.

Das faserverstärkte Polymere kann auch durch Abziehen des Lösungsmittels aus dem Reaktionsraum und eine anschließende Wäsche, wie oben beschrieben, gewonnen werden.

Die erfindungsgemäßen faserverstärkten Polyarylensulfide können zusätzlich mit anderen Polymeren, mit Pigmenten und Füllstoffen, beispielsweise Graphit, Metallpulver, Glaspulver, Quarzmehl, Glasfasern, den für Polyarylensulfide üblichen Additiven, beispielsweise Stabilisatoren oder Entformungsmitteln, versetzt und mechanisch abgemischt werden.

Die erfindungsgemäßen faser-verstärkten Polyarylensulfide können beispielsweise als Einbettmasse für Elektrobauteile, Dichtungsringe, Teile von Büromaschinen und Fernmeldeeinrichtungen etc. Verwendung finden.

## Beispiel

a) Aktivierung von Kohlenstoffasern mit Arylsulfonsäurechloriden

Kohlenstoffasern auf PAN-Basis enthalten nach der Graphitierung noch beträchtliche Mengen an Wasserstoff und Stickstoff (z.B. SIGRAFIL® SFC 0,5 ca. 0,4 Gew.-% H und ca. 3,0 Gew.-% N). Ein Teil des Wasserstoffes liegt in Form von reaktiven H-Atomen vor, die in den äußeren Graphitschichten der Fasern an Fehlstellen liegende C-Atome absättigen.

Diese Wasserstoffatome können unter Friedel-Crafts-Bedingungen mit einem reaktiven Elektrophil umgesetzt werden. Es wurde p-Chlorsulfonsäurechlorid verwendet, welches temperatur- und chemikalienbeständig an die Oberfläche der Kohlenstoffaser über eine C-S-Bindung gebunden wird.

Versuchsdurchführung:

144,00 g Kohlenstoffasern (SIGRAFIL® SFC 0,5) wurden zunächst 2,5 h im Ölpumpenvakuum bei 150 °C getrocknet.

Anschließend wurden die Fasern in einem 2l-Dreihalskolben, der mit einem Rührer und einem Rückflußkühler ausgestattet war, mit 9,50 g (= 45 mmol) p-Chlorbenzolsulfonsäurechlorid und 650 ml EXSOL® D 80 (getrocknet über Molsieb 4 Å) innerhalb von 20 min auf die Siedetemperatur des Suspensionsmittels (ca. 215 °C) unter Rühren aufgeheizt. Dann wurde der Kolbeninhalt 4 h bei dieser Temepratur gerührt. Während des Versuches wurde unter Stickstoffatmosphäre gearbeitet.

Die Fasern wurden zuletzt abfiltriert, mit Toluol und Aceton gewaschen und im Ölpumpenvakuum bei 100 °C 4 h lang getrocknet.

b) Herstellung von Polyphenylensulfid in Gegenwart der chemisch aktivierten Fasern

In einem 1,4 l Rührautoklaven, der mit einer Destillationsbrücke versehen war, wurden vorgelegt: 129,00 g Natriumsulfid x $H_2O$ (= 1 Mol), 300 g N-Methylpyrrolidon, 57,00 g Natriumacetat x $H_2O$, 19,60 g N,N-Dimethylacetamid und 8,00 g Natriumhydroxid. Der Reaktorinhalt wurde mit Stickstoff gespült und langsam auf 160 °C aufgeheizt, wobei sich das Natriumsulfid löst.

Über die Destillationsbrücke wurde dann ein Gemisch von Wasser und N-Methylpyrrolidon (96,95 g) abdestilliert. Die Reaktorinnentemperatur betrug am Ende der Destillation 202 °C.

Anschließend wurde der Reaktorinhalt auf ca. 160 °C abgekühlt und dem Reaktor im Stickstoffgegenstrom 95,00 g aktivierte Fasern, 148,50 g 1,4-Dichlorbenzol (= 1,01 Mol) und 0,68 g 1,2,4-Trichlorbenzol, gelöst in 150,00 g N-Methylpyrrolidon, zugesetzt. Das resultierende System wurde bei 160 °C unter 3 kg/cm² Stickstoffvordruck verschlossen und innerhalb 20 min auf 250 °C erhitzt (Rührerdrehzahl: 100 UpM). Der Reaktor wurde dann 8 Stunden bei dieser Temperatur gehalten. Der Druck betrug ca. 9,5 bar. Das Produkt wurde in üblicher Weise durch Fällen in Methanol, Ansäuern, elektrolytfrei Waschen mit Wasser, Waschen mit Aceton und Trocknen isoliert.

Ausbeute: 92,3 % d.Th. (bezogen auf das Polymere)

Z.B. kann durch Rasterelektronenmikroskopie gezeigt werden, daß das Polymere auf die Faser aufgezogen ist.

## Ansprüche

1. Faserverstärktes Polyphenylensulfid, dadurch gekennzeichnet, daß die Polykondensation zur Herstellung von Polyphenylensulfid in Gegenwart von chemisch mit Arylsulfonsäurechloriden aktivierten Fasern durchgeführt wird.

2. Verfahren zur Herstellung von gegebenenfalls verzweigten, faserverstärkten Polyphenylensulfiden aus

a) 50-100 Mol-% Dihalogenaromaten der Formel (I)

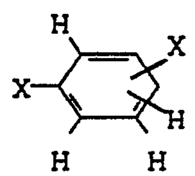

(I),

und 0-50 Mol-% Dihalogenaromaten der Formel (II)

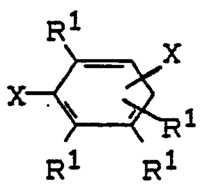

(II),

in denen

X für zueinander meta oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei orthoständige Reste $R^1$ zu einem aromatischen oder heterocyclischen Ring verknüpft sein können und immer ein Rest $R^1$ verschieden von Wasserstoff ist und

b) 0-3 Mol-%, bevorzugt 0,1 bis 2,0 Mol-%, besonders bevorzugt 0,4 bis 2,4 Mol-%, bezogen auf die Summe der Dihalogenaromaten der Formel I und II, eines Tri- oder Tetrahalogenaromaten der Formel (III)

$ArX_n$ (III),

wobei

Ar ein aromatischer oder heterocyclischer Rest ist,

X für Halogen wie Chlor oder Brom steht und

n 3 oder 4 ist und

c) Alkalisulfiden, gegebenenfalls zusammen mit Alkalihydroxiden wie Natrium- und Kaliumhydroxid, wobei das molare Verhältnis von (a+b):c im Bereich von 0,85:1 bis 1,15:1 liegt, in einem organischen Lösungsmittel, gegebenenfalls unter Mitverwendung von Katalysatoren und/oder Consolventien, dadurch gekennzeichnet, daß dem Umsetzungsgemisch chemisch mit Arylsulfonsäurechloriden aktivierte Fasern zugesetzt werden und die Umsetzung bei einer Temperatur von 160 °C bis 320 °C durchgeführt wird.

3. Verfahren nach Anspruch 2, dadurch gekennzeichnet, daß mit p-Chlorbenzolsulfonsäurechlorid vorbehandelte Kohlenstoffasern verwendet werden.